(19) Europäisches Patentamt
European Patent Office
Office européen des brevets

(11) **EP 3 978 773 B1**

(12) **EUROPEAN PATENT SPECIFICATION**

(45) Date of publication and mention
of the grant of the patent:
**12.04.2023 Bulletin 2023/15**

(21) Application number: **20199724.4**

(22) Date of filing: **02.10.2020**

(51) International Patent Classification (IPC):
*F16D 48/06* *(2006.01)*

(52) Cooperative Patent Classification (CPC):
**F16D 48/066;** F16D 2500/1026; F16D 2500/10412;
F16D 2500/3024; F16D 2500/3056;
F16D 2500/30803; F16D 2500/3166;
F16D 2500/50257; F16D 2500/5026

(54) **METHOD FOR CALIBRATING A COUPLING SYSTEM OF A MECHANICAL TRANSMISSION**

VERFAHREN ZUR KALIBRIERUNG EINES KUPPLUNGSSYSTEMS EINES MECHANISCHEN GETRIEBES

PROCÉDÉ D'ÉTALONNAGE D'UN SYSTÈME D'ACCOUPLEMENT D'UNE TRANSMISSION MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.04.2022 Bulletin 2022/14**

(73) Proprietor: **Robert Bosch GmbH
70442 Stuttgart (DE)**

(72) Inventors:
• **Werner, Franz
89129 Langenau (DE)**
• **Ilk, Erich
86169 Augsburg (DE)**
• **Hernandez Ladera, Paul Luis
89275 Elchingen (DE)**

(56) References cited:
WO-A1-2018/157950     DE-A1-102016 219 359
DE-A1-102019 105 616     DE-B3-102017 127 375

**Description**

TECHNICAL FIELD

The present invention relates to a method for calibrating a coupling system of a mechanical transmission.

PRIOR ART

In order to increase the transmission ratio range of a traction drive, hydrostatic transmissions with two hydraulic motors which are operated fluidically in parallel are known from the state of the art. The drive shaft power thereof can be added via a compounding transmission of the hydrostatic transmission and transmitted, for example, to a vehicle axle. For example, at a low velocity both hydraulic motors are in parallel operation and therefore permit a high traction force. Given a predefined delivery quantity of the hydraulic pump and against the background that the reduction of the swept volumes of the hydraulic motors entails a decreasing efficiency level, the velocity which can be achieved with two motors is limited.

In order to obtain a driving range of a relatively high velocity, one of the hydraulic motors can therefore be set to expulsion volume zero and be disconnected from the output by means of a clutch. The entire volume flow of the hydraulic pump is therefore directed via the remaining, usually smaller hydraulic motor, which permits relatively high rotational speeds and therefore relatively high velocities.

If both hydraulic motors then contribute again to the transmission of power, the clutch must be closed. For this purpose, the hydraulic motor which is previously disconnected from the output has to be accelerated from a wheeling state to its working rotational speed. This acceleration process is to take place both quickly and as far as possible without being noticed by the driver. Owing to these, to a certain extent, contradictory requirements, the control of the coupling process is demanding.

The clutch is activated, for example, by means of a hydraulic cylinder. Depending on the design, the closing of the clutch is brought about here either by the application of pressure medium to the hydraulic cylinder (positive clutch) or by the discharging of pressure medium from the hydraulic cylinder (negative clutch).

In principle, in a positive clutch system (in a negative clutch system the process is the opposite), the closing process of the clutch can be divided into two phases. In a first phase, the pressure medium is supplied in such a way that the clutch is engaged as quickly as possible, that is to say the clutch stroke is implemented so that the kiss point is reached in the shortest possible time. The second phase starts from the kiss point, that is to say if torque is being transmitted by the clutch. Starting from this point, the supply of pressure medium mainly only then brings about an increase in the transmissible torque of the clutch and no longer a clutch stroke.

The first phase is optimally very short in terms of time and ends in a position directly before the kiss point (the kiss point of a clutch is defined herein as the position of a clutch when the clutch makes initial frictional contact and begins transmitting torque between two different elements). The second phase is then preferably controlled in such a way that the respective hydraulic motor is accelerated in the desired way.

A proportional valve can be used to resolve this problematic situation. However, the kiss point then has to be known as a function of a process variable which can be saved in the transmission controller. At present, for this purpose, the kiss point is determined manually, and therefore calibrated before the delivery of the traction drive on the vehicle.

A disadvantage of this solution is, on the one hand, that the calibration and setting is complex. In addition, owing to the natural change in the coupling characteristic due to wear the re-calibration requires a new calibration every time.

In contrast to this, the disclosure is based on the object of providing a transmission combination which can be calibrated with little expenditure, and a traction drive therewith. Furthermore, an object of the disclosure is to provide a method for controlling, in particular for calibrating, the transmission combination.

Document DE102017127375 discloses a method according to the state of the art.

SUMMARY

The present invention is based on the idea of creating a function for the current needed to reach the kiss point, wherein this function is temperature dependent.

According to an embodiment of the present invention, a method for calibrating a coupling system of a summation mechanical transmission is provided, the coupling system being configured to couple a first drive shaft and a second drive shaft, the coupling system comprising an hydraulic coupling with two releasable coupling sections, wherein a first coupling section is connected to the first drive shaft and a second coupling section is connected to the second drive shaft, the coupling system further comprising an hydraulic cylinder which is connected to one of the first and the second coupling sections and is configured to engage and to disengage said first coupling section with said second coupling section based on a pressure inside said hydraulic cylinder, wherein the pressure inside said hydraulic cylinder can be regulated by means of a pressure regulating device, the method being characterized by comprising the following steps:

> a) Coupling and decoupling the first drive shaft with the second drive shaft for a predetermined number of times, said predetermined number of times being greater than or equal to one, wherein for each of said number of times the temperature of a pressure medium, which is the pressure medium introduced into said hydraulic cylinder during the coupling or during the uncoupling process by means of said pressure regulating device, is substantially the same;
> b) During the coupling process measuring a first time interval, which is the time requested for reaching a predetermined pressure value inside said hydraulic cylinder, wherein said predetermined pressure is a pressure at which a kiss point between said first coupling section and said second coupling section has still not been reached;
> c) Averaging the value of said first time interval obtained in each coupling process, wherein if said predetermined number of times is equal to one the averaged value is the value measured one time during step a.;

wherein said steps a. to c. are repeated for at least two different temperatures of the pressure medium, which is introduced into said hydraulic cylinder during the coupling or during the uncoupling process of step a.; wherein based on the averaged values of said first time interval obtained for said at least two different temperatures an interpolating function is estimated by interpolating the values of said first time interval obtained for said at least two temperatures, wherein said interpolating function is a function representing said first time interval over the temperature.

According to a further embodiment of this invention a method is provided, wherein said steps a. to c. are repeated for two different temperatures and wherein said interpolating function is a linear function.

According to a further embodiment of this invention a method is provided, wherein in said step c. said averaged value of said first interval is corrected with a corresponding time offset, which is a offset value dependent on the temperature of the pressure medium, which is the pressure medium introduced into said hydraulic cylinder during the coupling or during the uncoupling process.

According to a further embodiment of this invention a method is provided, wherein in said step a. said predetermined number of times is greater than four, preferably equal to five times.

According to a further embodiment of this invention a method is provided, wherein one of said for at least two different temperatures of the pressure medium, which is introduced into said hydraulic cylinder during the coupling or during the uncoupling process, is comprised between 20 and 40°C and wherein another of said at least two different temperatures of the pressure medium is comprised between 60 and 90°C.

According to a further embodiment of this invention a method is provided, wherein said predetermined pressure is determined by measuring the pressures inside said hydraulic cylinder, at which said first coupling section is fully engaged with said second coupling section and by choosing a value of the pressure inside said hydraulic cylinder at which said first coupling section is not completely engaged with said second coupling section and wherein the absolute value of the pressure difference between the predetermined pressure and the foremost pressure value, at which said first coupling section is fully engaged with said second coupling section, is equal to a predetermined value.

According to a further embodiment of this invention a method is provided, wherein said coupling system is a negative clutch, which is configured to decouple the first drive shaft from the second drive shaft when said hydraulic cylinder is pressurized and is configured to couple the first drive shaft with the second drive shaft when the pressure in said hydraulic cylinder is lower than a minimum corresponding value.

According to a further embodiment of this invention a method is provided, wherein said coupling system is a positive clutch, which is configured to couple the first drive shaft with the second drive shaft when said hydraulic cylinder is pressurized and is configured to decouple the first drive shaft from the second drive shaft when the pressure in said hydraulic cylinder is lower than a minimum corresponding value.

According to a further embodiment of this invention a method is provided, wherein said first drive shaft is connected to a first hydraulic motor and said second drive shaft is connected to a second hydraulic motor, wherein said first and said second hydraulic motors are motors of a hydrostatic transmission.

According to a further embodiment of this invention a method is provided, wherein said coupling system is a mechanical transmission of a vehicle, which is positioned between a hydrostatic transmission with a plurality of motors (at least two) and an output shaft of the summation mechanical transmission.

According to a further embodiment of this invention a method is provided, wherein said first time interval is a time used in an engagement process during which the first coupling section and the second coupling section are going to be engaged with each other, wherein during said first time interval the first coupling section and the second coupling section approach each other at the beginning of said engagement process before the approaching of the first coupling section and the second coupling section is slowed down during a second time interval.

According to a further embodiment of this invention a method is provided, wherein said at least two temperatures are measured in a tank which delivers pressure medium to said pressure regulating device.

BRIEF DESCRIPTION OF THE FIGURES

The present invention is described with reference to the enclosed figures wherein the same reference numbers refer to the same parts and/or to similar parts and/or to corresponding parts of the system. In the figures:

Figure 1 schematically shows a hydraulic diagram according to the state of the art;

Figure 2 shows a value of the pressure measured by the sensor 54 during the closing of the coupling system 12 and the current delivered to the electromagnet 78 through the signal line 80 according to a preferred embodiment of the present invention;

Figure 3 shows the method used for estimating an interpolating function, which is a function representing the emptying time $t_1$ over the temperature according to a preferred embodiment of the present invention;

Figure 4 shows the method used for detecting the kiss point according to a preferred embodiment of the present invention;

Figure 5 shows a first method for controlling the coupling system according to a preferred embodiment of the present invention;

Figure 6 shows a second method for controlling the coupling system according to a preferred embodiment of the present invention.

DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

In the present disclosure with the term "pressure medium" it is meant each type of medium, which can be pressurized and can be used to transmit power to different hydraulic elements, like an hydraulic oil.

It is to be noted that the particular physical values used for describing some working examples of the invention does not limit the scope of the invention, which is defined by the appended claims.

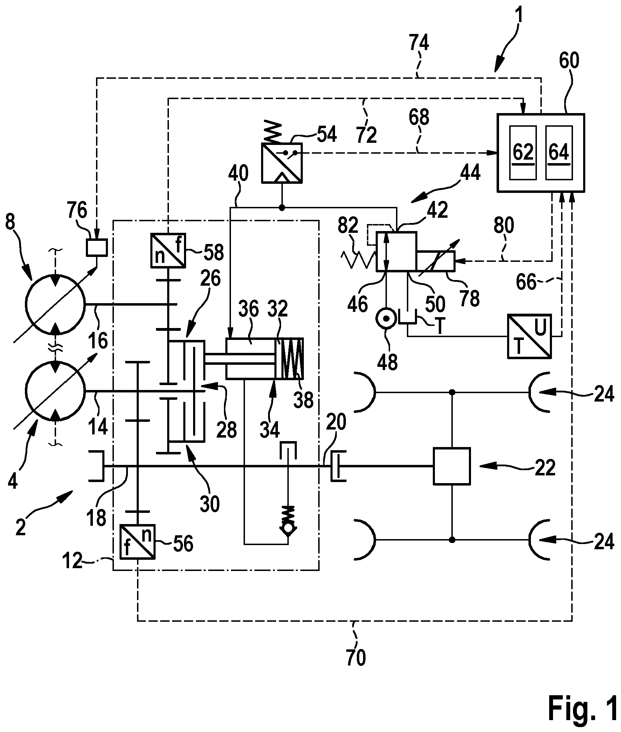

According to FIG. 1, a traction drive has a hydrostatic transmission 2 with a hydraulic machine (not shown) which operates as a hydraulic pump in the traction mode of the traction drive and two hydraulic machines 4 and 8 which operate as hydraulic motors in the specified traction mode. The two hydraulic motors 4, 8 are connected, on the one hand, to the hydraulic pump via working lines in a closed hydraulic circuit. The hydraulic machines can be adjusted in their expulsion volume, while they are each embodied as an axial piston machine with a swashplate design or bent-axis design.

The hydraulic pump is connected via its drive shaft to a drive machine, which is configured as a diesel engine. A first hydraulic motor 4 (in the description also identified as permanent motor) of the two hydraulic motors 4, 8 has a first drive shaft 14, and the second hydraulic motor 8 (in the description also identified as temporary motor) has a second drive shaft 16. A coupling system 12 with the two input shafts 14 and 16 is connected downstream of the hydrostatic transmission 2 as a mechanical transmission. An output shaft 20 of the coupling system 12 is connected in a rotationally fixed manner to a differential 22 of a drive axle, which rotates a predetermined number of wheels 24 (in this particular case four).

The coupling system 12 has a hydraulic coupling 26 with a first coupling section 28 non-rotatably connected to the first drive shaft 14 and a second coupling section 30 non-rotatably connected to the second drive shaft 16 via a gear arrangement. In the exemplary embodiment shown, the clutch 26 is designed as a multi-plate clutch.

A piston 32 of a hydraulic cylinder 34 is connected to the second coupling section 30 in order to actuate the hydraulic coupling 26. In the exemplary embodiment shown in Figure 1, the hydraulic coupling 26 is designed as a negative clutch, which means that the hydraulic coupling 26 is actuated or closed when an actual pressure p of a cylinder chamber 36 delimited by the piston 32 is lower than a predetermined value, which is, among other things, dependent from the spring force of a clutch spring 38.

The cylinder chamber 36 is connected via a pressure medium line 40 to a first pressure medium connection 42 of pressure control means 44 configured as a pressure control valve. Furthermore, the cylinder chamber 36 is further connected to a flushing line, so as to be able to release the oil contained within the cylinder chamber if a maximal pressure (for example 20 bar) is overcome.

A second pressure medium connection 46 of the pressure control means 44 is connected to a pressure medium source 48 and a third pressure medium connection 50 is connected to a pressure medium tank T. The tank T has a temperature detection unit 52, through which a pressure medium temperature can be detected.

As a further sensor system, a pressure detection unit 54 is provided, which is designed as a pressure sensor, through which a pressure in the pressure medium line 40 can be detected. In addition, a first speed detection unit 56 is provided, through which an actual speed of the shaft 18 can be detected and, knowing a transmission ratio of the shaft 18 to the first drive shaft 14, an actual speed of the first drive shaft 14 and thus an actual speed n1 of the first coupling section 28 can be determined. In addition, the transmission 1 has a second speed detection unit 58, through which an actual speed of the second drive shaft 16 can be detected and, knowing a gear ratio of the second drive shaft 16 to the second clutch section 30, an actual speed n2 of the second clutch section 30 can be determined.

To control the actuation of the clutch 26, the hydrostatic travel drive 1 has a control unit 60 with a memory unit 62 and a processor unit 64.

The temperature detection unit 52 is connected to the control unit 60 via a signal line 66, the pressure detection unit 54 via a signal line 68, the first speed detection unit 56 via a signal line 70 and the second speed detection unit 58 via a signal line 72.

The control unit 60 is connected via a signal line 74 to an adjusting device 76, through which the stroke volume of the second hydraulic machine 8 can be adjusted.

The pressure control means 44 has an electromagnet 78 which is connected to the control unit 60 via a signal line 80. A valve body of the pressure control means 44 is acted in the direction of a pressure medium connection of the first pressure medium connection 42 to the second pressure medium connection 46, by means of the current provided through the signal line 80 to the electromagnet 78. In the opposite direction, which corresponds to the actuation direction of the clutch 26 (in the case shown of the negative clutch), the valve body is acted by a spring force of a spring 82 and by the actual pressure p in the cylinder chamber 36 at the first pressure medium connection 42.

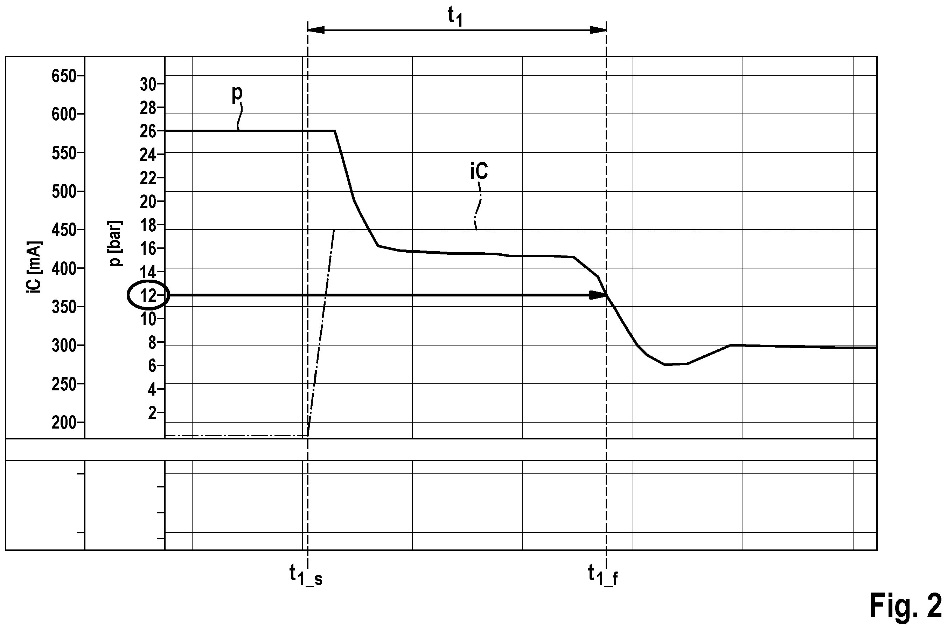

In the following, with reference to the Figures 2 to 4, a calibrating method for the system disclosed in figure 1 will be described.

This calibrating method is normally performed for every vehicle at the End of Line (EOL) and during the commissioning and can be requested by the operator every time. It is also recommended to execute the calibration after a specific number of working hours in operation (to be defined from gearbox and machine manufacturer), by badly driving performance noticed by the driver, or after a service in the hydrostatic units or the clutch circuit of the gearbox.

As described in the previous paragraphs, when the pressure control means 44 are not energized, the pressure in the cylinder chamber is the maximum achievable and almost corresponds to the system charging pressure at the pressure medium source 48. For example, the pressure can be a value between 27 and 30 bar. As the current via a signal line 80 increases, the pressure in the cylinder chamber 36 starts to decrease.

At the beginning of the calibration process, a venting process of the system is executed.

In particular, in order to remove any possible presence of the air from the pressure medium lines, from the pressure control means 44 and from the hydraulic cylinder 34, the coupling system 12, and in particular the clutch 26 thereof, is closed and open several times, by operating the pressure control means 44. The number of times of respectively opening and closing the clutch 26 for executing the venting process can be greater than ten times, preferably equal to fifteen times.

During this venting process the output speed of the diesel engine is monitored to be preferably between 1100 and 1300 rpm, the parking brake of the vehicle is activated, both the permanent motor speed and the temporary motor speed are equal to 0 and the current of the pressure control means is controlled with a rectangular wave cycle. During this venting process, the temperature of the pressure medium measured by the sensor 52 is maintained almost constant.

During this venting process, and in particular in correspondence with the last X times the coupling system 12 is closed and reopened (wherein X is preferably greater that four, more preferably equal to five), a first time interval $t_1$ is measured. The first time interval $t_1$ is a time requested for reaching a predetermined pressure value inside the hydraulic cylinder 34. This predetermined pressure is a pressure at which the first coupling section 28 is still not completely engaged with the second coupling section 30 (the kiss point has still not been reached).

The predetermined pressure is determined by measuring the pressures inside said hydraulic cylinder 34, at which the first coupling section 28 is completely engaged (the torque is transmitted therebetween) with the second coupling section 30 and by choosing a value of the pressure inside the hydraulic cylinder 34 at which the first coupling section 28 is not completely engaged with the second coupling section 30 and wherein the absolute value of the pressure difference between the predetermined pressure and the foremost pressure value, at which the first coupling section 28 is completely engaged with the second coupling section 30, is equal to a predetermined value (for example equal to 4 bar).

As will be clearer explained in the prosecution of the description, in the calibration process it is important to estimate a function for the first time interval $t_1$ over the temperature of the pressure medium in order to be able to estimate a value of the first time interval $t_1$ for each temperature of the pressure medium.

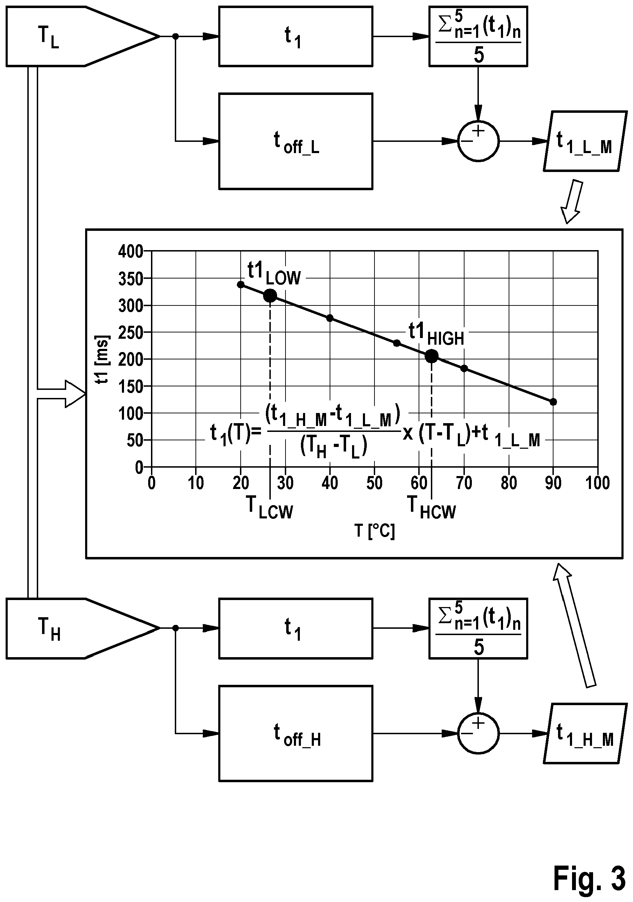

This process for determining the first time interval $t_1$, from now on simply called "emptying time", is explained in details with reference to figures 2 and 3.

Figure 2 shows a value of the pressure measured by the sensor 54 during the closing of the coupling system 12 (with a continuous line) and the current delivered to the electromagnet 78 through the signal line 80 (with a dashed line). In this particular example, the predetermined pressure is considered to be equal to 12 bar. As shown in figure 2, after increasing the current $i_c$ delivered to the actuator 78 of the pressure control means 44 the pressure starts with some delay to decrease (wherein the delay is dependent from the temperature of the pressure medium). After some time a stable condition is reached. After some time a strong pressure gradient occurs, which is caused by the approach to the kiss point. The predetermined value for the pressure is taken along this pressure drop (for example at the middle point between the pressure value at which a completely engagement occurs and the pressure value of said stable condition, before the strong pressure gradient occurs).

Therefore the emptying time $t_1$ it taken to be the difference in time between the time when the predetermined value for the pressure is reached and the time at which the current $i_c$ has been increased (t1_f - t1_s of figure 2).

As described above, the emptying time $t_1$ is measured preferably 5 times and a mean value is then calculated.

Figure 3 gives an overview for the method used for estimating an interpolating function, which is a function representing the emptying time $t_1$ over the temperature, so that the emptying time can be estimated for each temperature of the pressure medium.

The above described mean value of the emptying time is calculated for two different temperature values of the pressure medium: a low temperature $T_L$ comprised between 20 and 40°C and a high temperature $T_H$ comprised between 60 and 90°C.

The calculated mean value for the high and the low temperature of the pressure medium is corrected with an offset value, which is subtracted to the calculated mean value. The offset value is a function of the temperature of the pressure medium and is due to the fact that at lower temperatures the viscosity of the pressure medium has a higher influence. This offset value is important, as will be clearer in the prosecution of the description, for having more freedom in the way the kiss point is reached (to make possible of having the modulation phases until the clutch is closed). The offset value can be obtained from a function obtained during tests in different machines and at different temperatures of the pressure medium.

*Equation 1*

$$t_{1\_L\_M} = \frac{\sum_{n=1}^{5}(t_1)_n}{5} - t_{off\_L}$$

$$t_{1\_H\_M} = \frac{\sum_{n=1}^{5}(t_1)_n}{5} - t_{off\_H}$$

wherein $t_{1\_L\_M}$ and $t_{1\_H\_M}$ are respectively the calculated low and high temperature mean value for the emptying time $t_1$, $t_1$ is the emptying time which is measured each time, $t_{off\_L}$ and $t_{off\_H}$ are respectively the offset values for the low and the high temperature value.

Based on the values of $t_{1\_L\_M}$ and $t_{1\_H\_M}$ it can be derived a function of $t_1$. In this particular example, since $t_1$ has been estimed for just two temperatures, the interpolating function is a linear function. In alternatives embodiments, the value of $t_1$ can be also estimated for more temperature values and a polynomial interpolating function of n grad (with n the number of the temperatures for which $t_1$ has been estimated) can be obtained.

In this particular embodiment, the interpolating function reads as follows:

*Equation 2*

$$t_1(T) = \frac{(t_{1\_H\_M} - t_{1\_L\_M})}{(T_H - T_L)} \times (T - T_L) + t_{1\_L\_M}$$

Wherein $t_1(T)$ is the interpolating function, which is a function dependent from the temperature T; $t_{1\_L\_M}$ and $t_{1\_H\_M}$ are respectively the calculated low and high mean value for the emptying time $t_1$, which have been calculated in the previous step with equation 1, $T_L$ and $T_H$ are the temperature of the pressure medium at which $t_{1\_L\_M}$ and $t_{1\_H\_M}$ are calculated.

After having calculated the interpolating function for the emptying time $t_1$, this disclosure describes the determination of the kiss point. It is to be noted that this step can be executed simultaneously with the determination of the emptying time $t_1$.

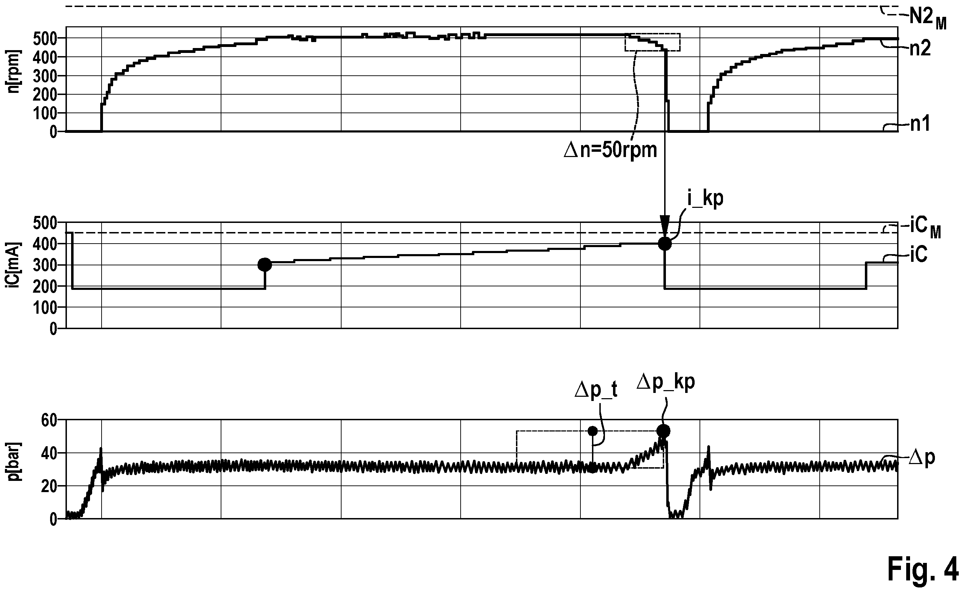

Figure 4 gives an overview of the method used for detecting the kiss point.

The graphic of figure 4 is divided into three portions. The upper portion shows the velocity n2 of the temporary motor 8 and the velocity n1 of the permanent motor 4 over the time, wherein $n2_M$ indicates an upper limit value for the velocity n2 of the temporary motor. The middle portion of figure 4 shows the value of the current $i_C$ delivered to the electromagnet 78 by the control unit 60 via the signal line 80 over the time, wherein $iC_M$ indicates an upper limit value for the current $i_C$. The lower portion of figure 4 shows a value of the pressure $\Delta p$ delivered by the hydraulic machine (not shown) given in the hydrostatic transmission (where the permanent motor 4 and the temporary motor 6 are contained).

As shown in the upper portion of figure 4, in order to determine the kiss point, the rotation velocity n1 of the permanent motor 4 is equal to 0, the velocity n2 of the temporary motor 8 is preferably equal to 500 rpm. At the same time, an upper limit value $n2_M$ for the velocity n2 of the temporary motor 8 is given (for example equal to 700 rpm), so that it can be monitored that the velocity n2 of the temporary motor 8 does not exceed said upper limit. Furthermore, during this process, the diesel engine speed is controlled to be preferably between 1100 and 1300 rpm and the flow rate of the temporary motor 8 is preferably lower than 20% of the maximum flow rate so as to avoid higher friction torque at the clutch during calibration reducing the cycle life of the parts due to wearing of friction plates.

As shown in the middle portion of figure 4, the current ic delivered to the electromagnet 78 is gradually increased, starting from a value of current at which the coupling process has still not started (for example at 315 mA), so that the coupling system 12 starts to close and the second coupling section 30 approaches the first coupling section 28. The ramp of the current ic can be for example equal to 2.7 mA/s. The inclination of the ramp is preferably chosen in a way that the first coupling section and the second coupling section approach almost at a constant velocity to each other. As described above, $iC_M$ indicates an upper limit value for the current ic, which is for example equal to 450 mA. If at a value equal to $iC_M$ the kiss point has still not have been reached the system aborts the calibration process for safety reasons.

After some time, by gradually increasing the current $i_C$, the pressure $\Delta p$ delivered by the hydraulic machine starts to increase. After some time the velocity of the temporary motor n2 starts to decrease, due to the friction between the first and the second coupling section 28, 30.

When the velocity n2 of the temporary motor 8 is reduced/braked about a predetermined amount, it can be considered that the kiss point has been reached. The inventor has found that in some applications with a velocity decrease of about 50 rpm ($\Delta n = 50$ rpm) it can be considered that the kiss point has been reached. When said $\Delta n$ has been reached the actual current ic is detected and this value is temporary saved. Alternatively, the kiss point can be also detecting by measuring the pressure $\Delta p$ delivered by the hydraulic machine and by assuming that when a predetermined $\Delta p$ is delivered the kiss point has been reached. Therefore, when said $\Delta p$ has been reached the actual current $i_C$ is detected and this value is temporary saved.

This operation is repeated three times for at least two different temperatures of the pressure medium. Preferably, the temperatures are the same used for calculating the emptying time. In particular: a low temperature $T_L$ is comprised between 20 and 40°C and a high temperature $T_H$ is comprised between 60 and 90°C.

Based on the values of the current ic, which has been detected at the kiss point for the two different temperatures, it can be derived a function for the current ic at the kiss point. In this particular example, since ic has been measured for just two temperatures, the interpolating function is a linear function. In alternatives embodiments, the value of can be also measured for more temperature values and a polynomial interpolating function of n grad (with n the number of the temperatures for which ic has been estimated) can be obtained.

As described above, if at a value of the current ic equal to $i_{CM}$ the kiss point has still not have been reached the system aborts the calibration process for safety reasons. Analogously, if the velocity n2 of the temporary motor 8 exceeds the upper limit value $n2_M$ for the velocity n2 the system aborts the calibration process for safety reasons. Furthermore, the pressure difference $\Delta p$ of the hydrostatic units must be observed in order to assure that the torque transmitted from the temporary motor 8 during the kiss point detection, does not exceed a permissible value. This is a requirement of the gearbox manufacturer to avoid that the clutch discs are not damaged during the calibration. At the beginning of the detection, where the temporary motor 8 rotates at 500 rpm (in the example described above) a pressure difference $\Delta p_i$ is measured. When the kiss point is detected, the value of the pressure difference will be higher because of the braking of the temporary motor and a $\Delta p_k$ is detected. It is important that the requirements of the following equation are fulfilled:

Equation 3

$$\Delta p_k - \Delta p_i \leq \Delta p_T$$

Wherein $\Delta p_T$ is a threshold value which has to be defined depending of the size of the motor, corresponding for instance to 20 Nm . Therefore, if during the kiss point detection the requirement of equation 3 is not fulfilled anymore, a diagnostic function has to abort the calibration process.

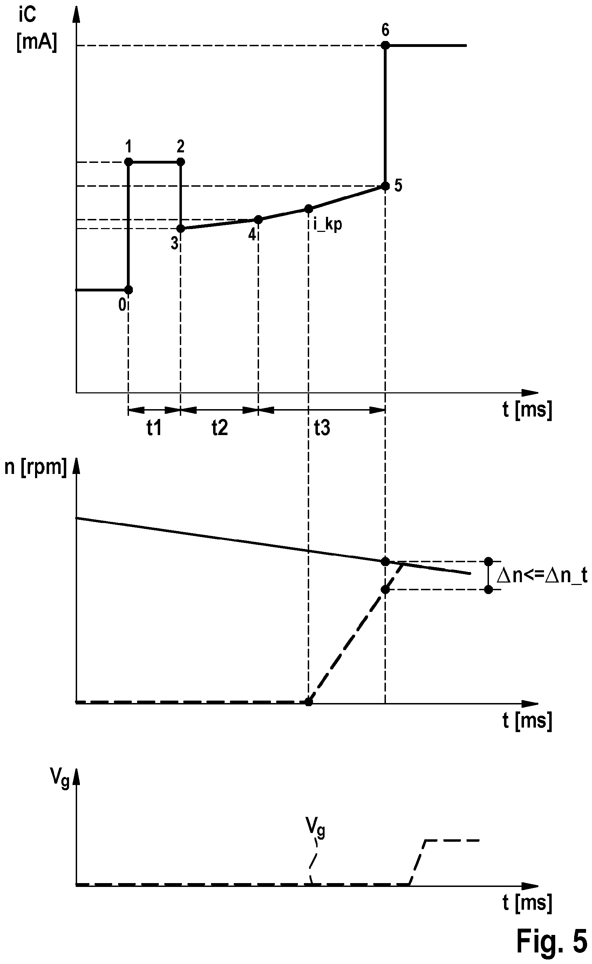

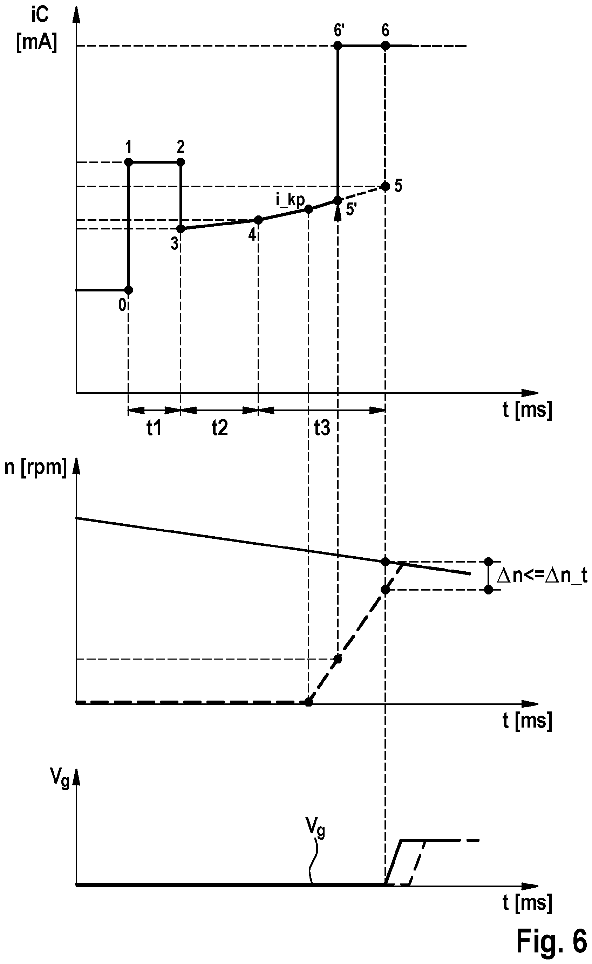

With reference to the figures 5 and 6 two alternative methods for controlling the coupling system 12 are described. Both figures 5 and 6 are divided into three portions. In the upper portion a value of the current $i_C$ over the time is represented. In the middle portion the velocity n1 of the permanent motor 4 (with a continuous line) and the velocity n2 of the temporary motor 8 (with a dashed line) over the time are represented. In the lower portion a value of the displacement $V_g$ (with a dashed line) of the temporary motor 8 over the time is represented.

It is to be noted that, in view of the description above, after having detected the actual temperature of the pressure medium both the emptying time t1 and the current ic at which the kiss point will be reached (i_kp) are known.

The control of the coupling system 12 and in particular of the first coupling section 28 and the second coupling section 30 is performed by controlling the current $i_C$ given to the actuator 78 of the pressure control means 44 and will be done when the downshift is requested depending on the vehicle velocity and drive pedal position.

While shifting from second to first gear, the temporary motor 8 has to be accelerated from 0 rpm to a velocity dependent from the permanent motor 4 speed.

For that, the first coupling section 28 and the second coupling section 30 should be moved quickly in order to reach a position near to the kiss point position. As shown in the upper portion of figure 5, this happens in the emptying phase $t_1$, which has been described above. Then, in the modulation phases $t_2$ and $t_3$ the first coupling section 28 and the second coupling section 30 will be closed slowly (the current ic is lower that during $t_1$). During the modulation phases $t_2$ and $t_3$ the approaching of the the first coupling section 28 and the second coupling section 30 is slowed down with respect with the approaching of the emptying phase $t_1$. Therefore, the modulation phases $t_2$ and $t_3$ can be simply called "modulation time", wherein during the modulation time the kiss point is reached.

The gradients of the modulation phases $t_2$ and $t_3$ are different in order to give flexibility for controlling different clutch system designs. The points 3 and 4 are given based on the calculated value the current ic at which the kiss point is reached (i_kp). For example, the current in 3 can be equal to i_kp-5mA and the current in 4 can be equal to i_kp-3mA. Furthermore, also the point 5 can be determined based on the i_kp. For example, the current in 5 can be equal to i_kp+7mA

When the kiss point is finally reached, the temporary motor 8 (see middle portion of Figure 5) will accelerate until reaching a speed in which the speed difference between the first coupling section 28 and the second coupling section 30 is less than a predetermined value $\Delta n\_t$, for example $\Delta n\_t$ is equal to 20 rpm (at the point 5 the following condition $\Delta n \leqq \Delta n\_t$ is fulfilled). At this point, the clutch will be completely closed (the current $i_C$ will suddenly increase). However, if at point 5 the velocity difference between the first coupling section 28 and the second coupling section 30 is higher than said predetermined value, for safety reasons the clutch will be completely reopened.

Finally, if the pressure in the cylinder chamber 36 is less than a predetermined value (for example 8 bar) the temporary motor 8 (see lower portion of figure 5) will be allowed for swiveling out and the temporary motor displacement $V_g$ will be continuously incremented.

In an alternative embodiment, in order to accelerate the coupling process, as shown in figure 6, the clutch will be completely closed earlier. In particular, if the velocity n2 of the temporary motor 8 is greater than a threshold value and if the gradient of the velocity of the temporary motor is greater than 0 (the velocity n2 is increasing) the clutch will be closed (the current $i_C$ will suddenly increase at point 5'). Additionally, if the pressure in the cylinder chamber 36 is less than a predetermined value (for example 8 bar) and the difference of velocities between the first coupling section 28 and the second coupling section 30 is less than 20 rpm the temporary motor 8 (see lower portion of figure 6) will be allowed for swiveling out and the temporary motor displacement $V_g$ will be continuously incremented.

As can be shown in the comparison at the lower portion of figure 4, in this particular embodiment the temporary motor displacement $V_g$ will increase earlier with respect to the embodiment shown in figure 5 (dashed line).

While the present invention has been described with reference to the embodiments described above, it is clear for the skilled person that it is possible to realize several modifications, variations and improvements of the present invention in the light of the teaching described above and within the ambit of the enclosed claims without departing from the spirit and the scope of protection of the invention.

For example, even if only a working example for a negative clutch has been described in details, it is clear that the present invention can be also used with the same technical advantages in a positive clutch.

In addition, those areas in which it is believed that those of ordinary skill in the art are familiar, have not been described herein in order not to unnecessarily obscure the invention described.

Accordingly, the invention is not to be limited by the specific illustrative embodiments, but only by the scope of the appended claims.

**Claims**

1. Method for calibrating a coupling system (12) of a summation mechanical transmission which is configured to couple a first drive shaft (14) and a second drive shaft (16), the coupling system (12) comprising an hydraulic coupling (26) with two releasable coupling sections (28, 30), wherein a first coupling section (28) is connected to the first drive shaft (14) and a second coupling section (30) is connected to the second drive shaft (16), the coupling system (12) further comprising an hydraulic cylinder (34) which is connected to one of the first and the second coupling sections (28, 30) and is configured to engage and to disengage said first coupling section (28) with said second coupling section (30) based on a pressure inside said hydraulic cylinder (34), wherein the pressure inside said hydraulic cylinder (34) can be regulated by means of a pressure regulating device (44), the method being **characterized by** comprising the following steps:

    a. Coupling and decoupling the first drive shaft (14) with the second drive shaft (16) for a predetermined number of times, wherein for each of said number of times the temperature of a pressure medium, which is the pressure medium introduced into said hydraulic cylinder (34) during the coupling or during the uncoupling process by means of said pressure regulating device (44), is substantially the same;

    b. During the coupling process measuring a first time interval ($t_1$), which is the time requested for reaching a predetermined pressure value inside said hydraulic cylinder (34), wherein said predetermined pressure is a pressure at which a kiss point between said first coupling section (28) and said second coupling section (30) has still not been reached;

    c. Averaging the value of said first time interval ($t_1$) obtained in each coupling process;

    wherein said steps a. to c. are repeated for at least two different temperatures ($T_L$, $T_H$) of the pressure medium, which is introduced into said hydraulic cylinder (34) during the coupling or during the uncoupling process of step a.; wherein based on the averaged values of said first time interval ($t_1$) obtained for said at least two different temperatures ($T_L$, $T_H$) an interpolating function is estimated by interpolating the values of said first time interval ($t_1$) obtained for said at least two temperatures ($T_L$, $T_H$), wherein said interpolating function is a function representing said first time interval ($t_1$) over the temperature.

2. Method according to claim 1, wherein said steps a. to c. are repeated for two different temperatures ($T_L$, $T_H$) and wherein said interpolating function is a linear function.

3. Method according to any of claims 1 or 2, wherein in said step c. said averaged value of said first interval ($t_1$) is corrected with a corresponding time offset, which is a offset value dependent on the temperature of the pressure medium, which is the pressure medium introduced into said hydraulic cylinder (34) during the coupling or during the uncoupling process.

4. Method according to any of claims 1 to 3, wherein in said step a. said predetermined number of times is greater than four, preferably equal to five times.

5. Method according to any of claims 1 to 4, wherein one of said for at least two different temperatures of the pressure medium, which is introduced into said hydraulic cylinder (34) during the coupling or during the uncoupling process, is comprised between 20 and 40°C and wherein another of said at least two different temperatures of the pressure medium is comprised between 60 and 90°C.

6. Method according to any of claims 1 to 5, wherein said predetermined pressure is determined by measuring the pressures inside said hydraulic cylinder (34), at which said first coupling section (28) is fully engaged with said second coupling section (30) and by choosing a value of the pressure inside said hydraulic cylinder (34) at which said first coupling section (28) is not completely engaged with said second coupling section (30) and wherein the absolute value of the pressure difference between the predetermined pressure and the foremost pressure value, at which said first coupling section (28) is fully engaged with said second coupling section (30), is equal to a predetermined value.

7. Method according to any of claims 1 to 4, wherein said coupling system is a negative clutch, which is configured to decouple the first drive shaft (14) from the second drive shaft (16) when said hydraulic cylinder is pressurized and is configured to couple the first drive shaft (14) with the second drive shaft (16) when the pressure in said hydraulic cylinder is lower than a minimum corresponding value.

8. Method according to any of claims 1 to 4, wherein said coupling system is a positive clutch, which is configured to couple the first drive shaft (14) with the second drive shaft (16) when said hydraulic cylinder is pressurized and is configured to decouple the first drive shaft (14) from the second drive shaft (16) when the pressure in said hydraulic cylinder is lower than a minimum corresponding value.

9. Method according to any of claims 1 to 8, wherein said first drive shaft (14) is connected to a first hydraulic motor (4) and said second drive shaft (16) is connected to a second hydraulic motor (8), wherein said first and said second hydraulic motors (4, 8) are motors of an hydrostatic transmission.

10. Method according to any of claims 1 to 9, wherein said coupling system is a mechanical transmission of a vehicle, which is positioned between a hydrostatic transmission with a plurality of hydraulic motors (4, 8) and an output shaft (20) of the summation mechanical transmission.

11. Method according to any of claims 1 to 10, wherein said first time interval $(t_1)$ is a time used in an engagement process during which the first coupling section (28) and the second coupling section (30) are going to be engaged with each other, wherein during said first time interval $(t_1)$ the first coupling section (28) and the second coupling section (30) approach each other at the beginning of said engagement process before the approaching of the first coupling section (28) and the second coupling section (30) is slowed down during a second time interval $(t_2)$.

12. Method according to any of claims 1 to 11, wherein said at least two temperatures $(T_L, T_H)$ are measured in a tank which delivers pressure medium to said pressure regulating device (44).

**Patentansprüche**

1. Verfahren zum Kalibrieren eines Kopplungssystems (12) eines mechanischen Summierungsgetriebes, das dazu ausgelegt ist, eine erste Antriebswelle (14) und eine zweite Antriebswelle (16) zu koppeln, wobei das Kopplungssystem (12) eine Hydraulikkopplung (26) mit zwei lösbaren Kopplungsabschnitten (28, 30) umfasst, wobei ein erster Kopplungsabschnitt (28) mit der ersten Antriebswelle (14) verbunden ist und ein zweiter Kopplungsabschnitt (30) mit der zweiten Antriebswelle (16) verbunden ist, wobei das Kopplungssystem (12) ferner einen Hydraulikzylinder (34) umfasst, der mit einem des ersten und des zweiten Kopplungsabschnitts (28, 30) verbunden ist und dazu ausgelegt ist, basierend auf einem Druck in dem Hydraulikzylinder (34) den ersten Kopplungsabschnitt (28) mit dem zweiten Kopplungsabschnitt (30) in Eingriff zu bringen und den Eingriff zu lösen, wobei der Druck in dem Hydraulikzylinder (34) mittels einer Druckregelvorrichtung (44) geregelt werden kann, wobei das Verfahren **dadurch gekennzeichnet ist, dass** es die folgenden Schritte umfasst:

   a. Koppeln und Entkoppeln der ersten Antriebswelle (14) mit der zweiten Antriebswelle (16) für eine vorbestimmte Anzahl von Malen, wobei für jede der Anzahl von Malen die Temperatur eines Druckmediums, welches das Druckmedium ist, das während des Kopplungs- oder während des Entkopplungsprozesses mittels der Druckregelvorrichtung (44) in den Hydraulikzylinder (34) eingebracht wird, im Wesentlichen dieselbe ist;
   b. Während des Kopplungsprozesses, Messen eines ersten Zeitintervalls $(t_1)$, welches die Zeit ist, die zum Erreichen eines vorbestimmten Druckwerts in dem Hydraulikzylinder (34) angefordert wird, wobei der vorbestimmte Druck ein Druck ist, bei dem ein Berührungspunkt zwischen dem ersten Kopplungsabschnitt (28) und dem zweiten Kopplungsabschnitt (30) noch nicht erreicht wurde;
   c. Mitteln des Werts des ersten Zeitintervalls $(t_1)$, der bei jedem Kopplungsprozess erhalten wird;
   wobei die Schritte a. bis c. für mindestens zwei unterschiedliche Temperaturen $(T_L, T_H)$ des Druckmediums wiederholt werden, welches während des Kopplungs- oder während des Entkopplungsprozesses von Schritt a. in den Hydraulikzylinder (34) eingebracht wird;
   wobei basierend auf den gemittelten Werten des ersten Zeitintervalls $(t_1)$, die für die mindestens zwei unterschiedlichen Temperaturen $(T_L, T_H)$ erhalten wurden, eine Interpolationsfunktion durch Interpolieren der Werte des ersten Zeitintervalls $(t_1)$, die für die mindestens zwei Temperaturen $(T_L, T_H)$ erhalten wurden, geschätzt wird, wobei die Interpolationsfunktion eine Funktion ist, die das erste Zeitintervall $(t_1)$ über der Temperatur darstellt.

2. Verfahren nach Anspruch 1, wobei die Schritte a. bis c. für zwei unterschiedliche Temperaturen $(T_L, T_H)$ wiederholt werden und wobei die Interpolationsfunktion eine lineare Funktion ist.

3. Verfahren nach einem der Ansprüche 1 oder 2, wobei in dem Schritt c. der gemittelte Wert des ersten Intervalls $(t_1)$ mit einem entsprechenden Zeitversatz korrigiert wird, welcher ein Versatzwert ist, der von der Temperatur des Druckmediums abhängt, welches das Druckmedium ist, das während des Kopplungs- oder während des Entkopplungsprozesses in den Hydraulikzylinder (34) eingebracht wird.

4. Verfahren nach einem der Ansprüche 1 bis 3, wobei in dem Schritt a. die vorbestimmte Anzahl von Malen größer als vier, vorzugsweise gleich fünf Mal ist.

5. Verfahren nach einem der Ansprüche 1 bis 4, wobei eine der mindestens zwei unterschiedlichen Temperaturen des Druckmediums, welches während des Kopplungs- oder während des Entkopplungsprozesses in den Hydraulikzylinder (34) eingebracht wird, zwischen 20 und 40 °C umfasst und wobei eine andere der mindestens zwei unterschiedlichen Temperaturen des Druckmediums zwischen 60 und 90 °C umfasst.

6. Verfahren nach einem der Ansprüche 1 bis 5, wobei der vorbestimmte Druck durch Messen der Drücke in dem Hydraulikzylinder (34), bei denen der erste Kopplungsabschnitt (28) vollständig mit dem zweiten Kopplungsabschnitt (30) in Eingriff ist, und durch Auswählen eines Wertes des Drucks in dem Hydraulikzylinder (34), bei dem der erste Kopplungsabschnitt (28) nicht vollständig mit dem zweiten Kopplungsabschnitt (30) in Eingriff ist, bestimmt wird, und wobei der Absolutwert der Druckdifferenz zwischen dem vorbestimmten Druck und dem ersteren Druckwert, bei dem der erste Kopplungsabschnitt (28) vollständig mit dem zweiten Kopplungsabschnitt (30) in Eingriff ist, gleich einem vorbestimmten Wert ist.

7. Verfahren nach einem der Ansprüche 1 bis 4, wobei das Kopplungssystem eine Negativkupplung ist, die dazu ausgelegt ist, die erste Antriebswelle (14) von der zweiten Antriebswelle (16) zu entkoppeln, wenn der Hydraulikzylinder mit Druck beaufschlagt ist, und dazu ausgelegt ist, die erste Antriebswelle (14) mit der zweiten Antriebswelle (16) zu koppeln, wenn der Druck in dem Hydraulikzylinder kleiner als ein entsprechender Mindestwert ist.

8. Verfahren nach einem der Ansprüche 1 bis 4, wobei das Kopplungssystem eine Positivkupplung ist, die dazu ausgelegt ist, die erste Antriebswelle (14) mit der zweiten Antriebswelle (16) zu koppeln, wenn der Hydraulikzylinder mit Druck beaufschlagt ist, und dazu ausgelegt ist, die erste Antriebswelle (14) von der zweiten Antriebswelle (16) zu entkoppeln, wenn der Druck in dem Hydraulikzylinder kleiner als ein entsprechender Mindestwert ist.

9. Verfahren nach einem der Ansprüche 1 bis 8, wobei die erste Antriebswelle (14) mit einem ersten Hydraulikmotor (4) verbunden ist und die zweite Antriebswelle (16) mit einem zweiten Hydraulikmotor (8) verbunden ist, wobei der erste und der zweite Hydraulikmotor (4, 8) Motoren eines hydrostatischen Getriebes sind.

10. Verfahren nach einem der Ansprüche 1 bis 9, wobei das Kopplungssystem ein mechanisches Getriebe eines Fahrzeugs ist, das zwischen einem hydrostatischen Getriebe mit einer Mehrzahl von Hydraulikmotoren (4, 8) und einer Abtriebswelle (20) des mechanischen Summierungsgetriebes positioniert ist.

11. Verfahren nach einem der Ansprüche 1 bis 10, wobei das erste Zeitintervall ($t_1$) eine Zeit ist, die in einem Eingriffsprozess aufgewendet wird, während dessen der erste Kopplungsabschnitt (28) und der zweite Kopplungsabschnitt (30) miteinander in Eingriff gebracht werden, wobei während des ersten Zeitintervalls ($t_1$) der erste Kopplungsabschnitt (28) und der zweite Kopplungsabschnitt (30) sich einander zu Beginn des Eingriffsprozesses annähern, bevor die Annäherung des ersten Kopplungsabschnitts (28) und des zweiten Kopplungsabschnitts (30) während eines zweiten Zeitintervalls ($t_2$) verlangsamt wird.

12. Verfahren nach einem der Ansprüche 1 bis 11, wobei die mindestens zwei Temperaturen ($T_L$, $T_H$) in einem Tank gemessen werden, welcher das Druckmedium zu der Druckregelvorrichtung (44) bereitstellt.

**Revendications**

1. Procédé d'étalonnage d'un système d'accouplement (12) d'une transmission mécanique à sommation qui est configurée pour accoupler un premier arbre d'entraînement (14) et un second arbre d'entraînement (16), le système d'accouplement (12) comprenant un accouplement hydraulique (26) ayant deux sections d'accouplement libérables (28, 30), une première section d'accouplement (28) étant reliée au premier arbre d'entraînement (14) et une seconde section d'accouplement (30) étant reliée au second arbre d'entraînement (16), le système d'accouplement (12) comprenant en outre un cylindre hydraulique (34) qui est relié à l'une des première et seconde sections d'accouplement (28, 30) et étant configuré pour mettre en prise et désolidariser ladite première section d'accouplement (28) avec ladite seconde section d'accouplement (30) sur la base d'une pression à l'intérieur dudit cylindre hydraulique (34), la pression à l'intérieur dudit cylindre hydraulique (34) pouvant être régulée au moyen d'un dispositif de régulation de pression (44), le procédé étant **caractérisé en ce qu'**il comprend les étapes suivantes :

a. Accouplement et désaccouplement du premier arbre d'entraînement (14) par rapport au second arbre d'entraînement (16) un nombre prédéterminé de fois, pour chaque fois dudit nombre de fois, la température d'un milieu de pression, qui est le milieu de pression introduit dans ledit cylindre hydraulique (34) pendant le processus d'accouplement ou pendant le processus de désaccouplement au moyen dudit dispositif de régulation de pression (44), étant sensiblement la même ;

b. Mesure, pendant le processus d'accouplement, d'un premier intervalle de temps ($t_1$), qui est le temps nécessaire pour atteindre une valeur de pression prédéterminée à l'intérieur dudit cylindre hydraulique (34), ladite pression prédéterminée étant une pression à laquelle un point de contact entre ladite première section d'accouplement (28) et ladite seconde section d'accouplement (30) n'a pas encore été atteint ;

c. Calcul de la moyenne de la valeur dudit premier intervalle de temps ($t_1$) obtenu dans chaque processus d'accouplement ;

lesdites étapes a. à c. étant répétées pour au moins deux températures différentes ($T_L$, $T_H$) du milieu de pression, qui est introduit dans ledit cylindre hydraulique (34) pendant le processus d'accouplement ou pendant le processus de désaccouplement de l'étape a. ;

sur la base des valeurs moyennées dudit premier intervalle de temps ($t_1$) obtenues pour lesdites au moins deux températures différentes ($T_L$, $T_H$), une fonction d'interpolation étant estimée par interpolation des valeurs dudit premier intervalle de temps ($t_1$) obtenues pour lesdites au moins deux températures ($T_L$, $T_H$), ladite fonction d'interpolation étant une fonction représentant ledit premier intervalle de temps ($t_1$) sur la température.

2. Procédé selon la revendication 1, dans lequel lesdites étapes a. à c. sont répétées pour deux températures différentes ($T_L$, $T_H$) et dans lequel ladite fonction d'interpolation est une fonction linéaire.

3. Procédé selon l'une quelconque des revendications 1 ou 2, dans lequel, dans ladite étape c., ladite valeur moyennée dudit premier intervalle ($t_1$) est corrigée avec un décalage temporel correspondant, qui est une valeur de décalage dépendant de la température du fluide sous pression, qui est le fluide sous pression introduit dans ledit cylindre hydraulique (34) pendant le processus d'accouplement ou pendant le processus de désaccouplement.

4. Procédé selon l'une quelconque des revendications 1 à 3, dans lequel, dans ladite étape a., ledit nombre prédéterminé de fois est supérieur à quatre, de préférence égal à cinq fois.

5. Procédé selon l'une quelconque des revendications 1 à 4, dans lequel l'une desdites au moins deux températures différentes du milieu de pression, qui est introduit dans ledit cylindre hydraulique (34) pendant le processus d'accouplement ou pendant le processus de désaccouplement, est comprise entre 20 et 40°C et dans lequel une autre desdites au moins deux températures différentes du milieu de pression est comprise entre 60 et 90°C.

6. Procédé selon l'une quelconque des revendications 1 à 5, dans lequel ladite pression prédéterminée est déterminée en mesurant les pressions à l'intérieur dudit cylindre hydraulique (34), auxquelles ladite première section d'accouplement (28) est complètement en prise avec ladite seconde section d'accouplement (30) et en choisissant une valeur de la pression à l'intérieur dudit cylindre hydraulique (34) à laquelle ladite première section d'accouplement (28) n'est pas complètement en prise avec ladite seconde section d'accouplement (30) et dans lequel la valeur absolue de la différence de pression entre la pression prédéterminée et la première valeur de pression, à laquelle ladite première section d'accouplement (28) est complètement en prise avec ladite seconde section d'accouplement (30), est égale à une valeur prédéterminée.

7. Procédé selon l'une quelconque des revendications 1 à 4, dans lequel ledit système d'accouplement est un embrayage négatif, qui est configuré pour désaccoupler le premier arbre d'entraînement (14) du second arbre d'entraînement (16) lorsque ledit cylindre hydraulique est sous pression et est configuré pour accoupler le premier arbre d'entraînement (14) avec le second arbre d'entraînement (16) lorsque la pression dans ledit cylindre hydraulique est inférieure à une valeur minimale correspondante.

8. Procédé selon l'une quelconque des revendications 1 à 4, dans lequel ledit système d'accouplement est un embrayage positif, qui est configuré pour accoupler le premier arbre d'entraînement (14) avec le second arbre d'entraînement (16) lorsque ledit cylindre hydraulique est sous pression et est configuré pour désaccoupler le premier arbre d'entraînement (14) du second arbre d'entraînement (16) lorsque la pression dans ledit cylindre hydraulique est inférieure à une valeur minimale correspondante.

9. Procédé selon l'une quelconque des revendications 1 à 8, dans lequel ledit premier arbre d'entraînement (14) est relié à un premier moteur hydraulique (4) et ledit second arbre d'entraînement (16) est relié à un second moteur hydraulique (8), dans lequel lesdits premier et second moteurs hydrauliques (4, 8) sont des moteurs d'une transmission hydrostatique.

**10.** Procédé selon l'une quelconque des revendications 1 à 9, dans lequel ledit système d'accouplement est une transmission mécanique d'un véhicule, qui est positionnée entre une transmission hydrostatique avec une pluralité de moteurs hydrauliques (4, 8) et un arbre de sortie (20) de la transmission mécanique à sommation.

**11.** Procédé selon l'une quelconque des revendications 1 à 10, dans lequel ledit premier intervalle de temps ($t_1$) est un temps utilisé dans un processus de mise en prise pendant lequel la première section d'accouplement (28) et la seconde section d'accouplement (30) vont être mises en prise l'une avec l'autre, dans lequel pendant ledit premier intervalle de temps ($t_1$) la première section d'accouplement (28) et la seconde section d'accouplement (30) s'approchent l'une de l'autre au début dudit processus de mise en prise avant que l'approche de la première section d'accouplement (28) et de la seconde section d'accouplement (30) ne soit ralentie pendant un second intervalle de temps ($t_2$).

**12.** Procédé selon l'une quelconque des revendications 1 à 11, dans lequel lesdites au moins deux températures ($T_L$, $T_H$) sont mesurées dans un réservoir qui délivre du fluide sous pression audit dispositif de régulation de pression (44).

Fig. 1

Fig. 2

$$t_1(T) = \frac{(t_{1\_H\_M} - t_{1\_L\_M})}{(T_H - T_L)} \times (T - T_L) + t_{1\_L\_M}$$

Fig. 3

Fig. 4

EP 3 978 773 B1

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017127375